# EUROPEAN PATENT SPECIFICATION

(11) **EP 1 197 095 B1**
(45) Date of publication and mention of the grant of the patent: **31.08.2005**
(21) Application number: 00940312.2
(22) Date of filing: 02.06.2000
(51) Int. Cl.: H04Q 3/00

(54) **Method and media controller for sending signalling messages over a communication system comprising two different transport networks**
Verfahren und Mediensteuerung zum Senden von Signalisierungsnachrichten über ein Kommunikationssystem bestehend aus zwei unterschiedlichen Transportnetzen
Mèthode et controlleur de media pour envoyer des messages de signalisation via un réseau de communication comprenant deux réseaux de transport différents

(30) Priority: 21.07.1999 GB 9917121
(43) Date of publication of application: 17.04.2002
(73) Proprietor: TELEFONAKTIEBOLAGET LM ERICSSON (publ), 164 83 Stockholm (SE)
(72) Inventor: GRAF, Leslie, Melbourne, 3103 (AU); HOLLIS, Mark, Park Orchards, 3114 (AU); TERRIL, Stephen, RS-11232 Stockholm (SE); GROVES, Christian, Keilor, VIC 3036 (AU); RYTINA, Ian, Victoria 3053 (AU); NOGUERA-RODRIGUEZ, Juan, 16732 Bromma, Stockholm (SE)
(74) Representative: Lind, Robert
(86) International application number: PCT/EP2000/005110
(87) International publication number: WO 2001/008424

(56) References cited:
- WO-A-96/27967
- WO-A-99/29124
- GB-A- 2 321 159
- ANQUETIL L -P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION,ALCATEL. BRUSSELS,BE, 1 April 1999 (1999-04-01), pages 151-157, XP000830045 ISSN: 0013-4252

## Description

### Field of the Invention

The present invention relates to mixed media communication systems and in particular, though not necessarily, to such systems in which at least one of the media is an Internet Protocol (IP) based media.

### Background to the invention

Telecommunications networks currently rely to a large extent upon the Signalling System no.7 (SS7) as the mechanism for controlling call connections and for handling the transfer of signalling information between signalling points of the networks. Typically, one or more application and user parts at a given signalling point will make use of SS7 to communicate with peer application and user parts at some other signalling point. Examples of user parts are ISUP (ISDN User Part) and TUP (Telephony User Part) whilst examples of application parts are INAP (Intelligent Network Application Part) and MAP (Mobile Application Part). The conventional SS7 protocol stack includes Message Transfer Parts MTP1, MTP2, and MTP3 which handle the formatting of signalling messages for transport over the physical layer as well as various routing functions.

The physical layer which transports signalling information typically uses Time Division Multiplexing (TDM) to ensure high reliability in terms of low packet loss, high availability, and low delay and redundancy. However, TDM based equipment is relatively expensive and new telecommunications networks are increasingly employing packet based transmission technologies such as TCP/IP, UDP/IP, and IP which are generally most cost effective (the development of IP technologies for transporting signalling information parallels the development of similar technologies for transporting user data such as voice, facsimile, etc). Unfortunately, traditional IP networks are characterised by high packet loss and long delays which is unacceptable for telecommunications signalling (users will not tolerate delays and failures when setting up and using call connections). The direct transfer of SS7 signalling messages over IP networks is therefore not an option.

The Internet Engineering Task Force (IETF) has addressed this problem by seeking to define a new protocol which will enable the reliable transport of signalling information over IP networks. The responsible IETF working groups are known as IPSS7 and SIGTRAN and the scope of their work is defined as follows: "Signaling transport provides transparent transport of message-based signaling protocols over IP networks. The scope of this work includes definition of encapsulation methods, end-to-end protocol mechanisms and use of IP capabilities to support the functional and performance requirements for signaling."

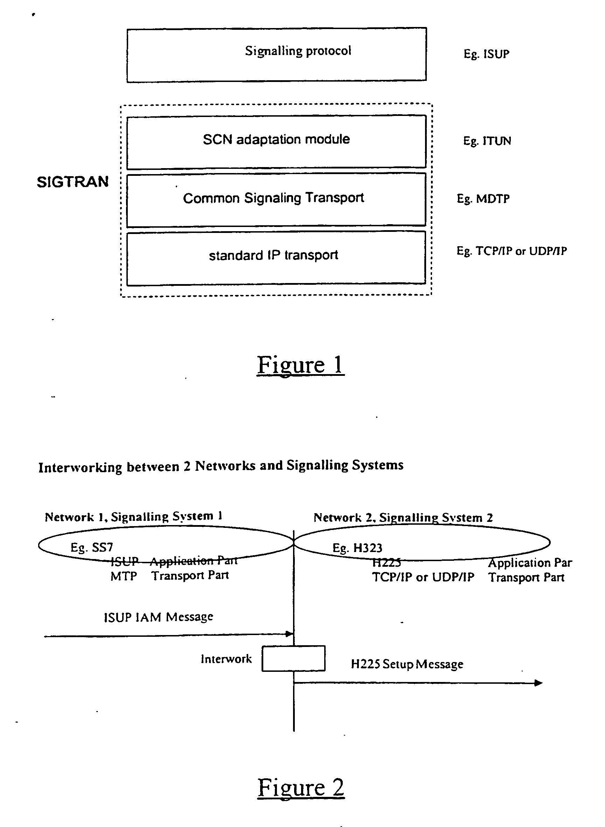

The SIGTRAN working group has developed an architecture for the protocol which consists of several layers as illustrated in Figure 1. These layers lie beneath whatever signalling protocol is being transported by the IP network, e.g. ISUP. The three layers making up SIGTRAN are as follows:
1) an adaptation sub-layer that supports specific primitives (e.g., send.data and management indications) required by a particular Switched Circuit Network (SCN) signaling application protocol (e.g. ISUP);
2) a Common Signaling Transport Protocol that supports a common set of reliable transport functions for signaling transport; and
3) a standard, unmodified TCP/IP, UDP/IP, or IP transport protocol.
It will be appreciated that the adaptation sub-layer may also provide adaptation to non-SCN protocols such as H.225, H.245, SIP etc.

This signalling transport work has also been of interest with regard to Multimedia networks such as those based on ITU recommendation H.323. The control protocols in H.323 networks typically already run over a packet based transport technology. These control protocols provide some of the same functionality as SS7 protocols today.

Figure 2 illustrates a current scenario involving the interworking of two signalling networks based on different signalling systems, namely SS7 and H.323. A gateway node at the interface between the two networks converts SS7 messages into like H.323 messages and *vice versa*. For example, the gateway node might convert an ISUP IAM message to an H.225 Setup message, and an ISUP CPG message to an H.225 Notify message.

Whilst such interworking will generally provide for basic telecommunications services, the mis-match between the two sets of signalling messages will degrade more advanced services and functions. For example, H.225 carries some extra information that it is not in ISUP such as H225 User-User Information elements, whilst ISUP carries information which cannot be transmitted in H.225 messages. In order to avoid such degradation, it becomes attractive to be able to use SS7 protocols in other telecommunication signalling networks such as H.323. That is to say that it is desirable to allow SS7 messages to be carried unmodified across an H.323 network (or other such network) such that the SS7 messages are available to nodes within the H.323 network and to other gateway nodes to which the H.323 network is connected.

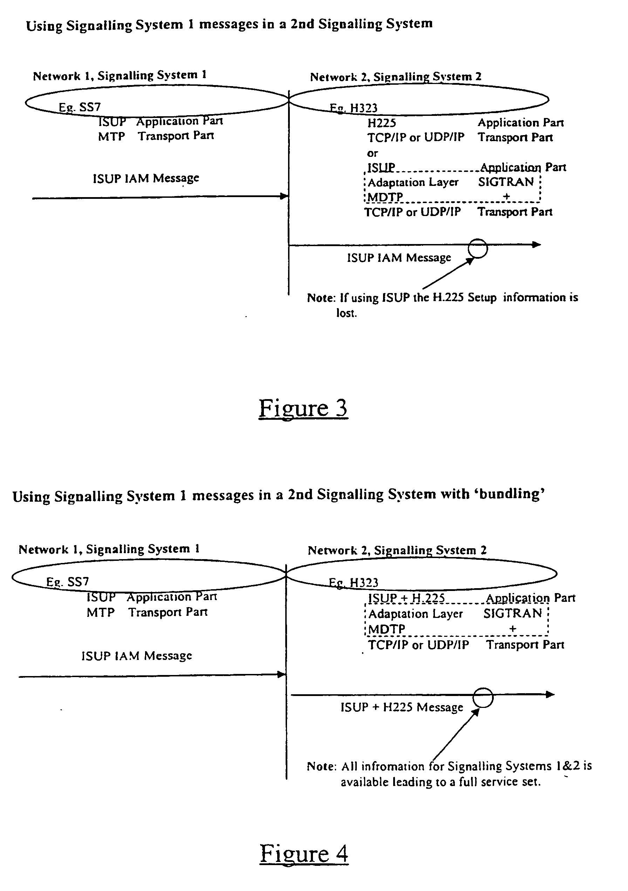

To achieve an appropriate 'service level' for the carried protocol, SIGTRAN relies on two layers, namely the "transport layer" and the "application layer". For example in the SS7 to H.323 case, to ensure the correct level of service for the transport layer, it is proposed to use the SIGTRAN protocol whilst at the application layer an SS7 protocol (eg. ISUP, TCAP) is used in the H.323 network. This reduces the amount of interworking at network edges or interfaces. Figure 3 illustrates the sending of messages from one signalling system over a network based on another signalling system. Multi-Network Datagram Transmission Protocol (MDTP) is a candidate protocol for the SIGTRAN Common Signalling Transport layer.

WO96/27967 describes a subsystem for communicating a private network signalling message over a packet network. The message to be communicated is encapsulated within a routable protocol frame at a transmitting user station and is de-encapsulated at a receiving user station.

### Summary of the Present Invention.

Whilst solving the problem of making the SS7 information available to the H.323 network, the above solution results in the loss of information carried by H.323 messages and which is not carried by the respective corresponding SS7 messages. This may result in the degradation of the services available to the H.323 users. The loss of addressing information may also result in routing problems.

It is an object of the present invention to overcome or at least mitigate the disadvantages noted in the preceding paragraph. This and other objects are achieved at least in part by encapsulating appropriate messages, from the signalling networks on both sides of a network interface, into a single transport message.

According to a first aspect of the present invention there is provided a method of sending signalling messages over a communication system comprising at least two different signalling networks coupled together at a media controller, the method comprising:
receiving a signalling message of a first signalling transport protocol at the media controller, the message being sent to the media controller over a first of the signalling networks;
at the media controller, defining a signalling message or part(s) thereof of a second signalling transport protocol corresponding to said signalling message of the first signalling transport protocol;
characterised by
constructing a composite signalling message containing at least part of the information contained in the received message and at least part of the information contained in the defined signalling message or part(s) thereof;
sending the composite signalling message over a second of the signalling networks, wherein the reliable transport of the composite signalling message across said second network is ensured by a Common Signalling Transport Protocol (CSTP) layer, which layer resides at the media controller above the transport media protocol layer,
wherein an adaptation protocol layer, residing above the CSTP layer, generates message primitives of an adaptation layer message, which message is arranged to contain in its user data field said composite signalling message, and
receiving a composite signalling message at a node within or at the edge of the second signalling network, and at an adaptation protocol layer thereof decomposing the composite signalling message into first and second protocol parts, and passing one or both of these parts to application and/or user parts..

It will be appreciated that the composite signalling message may be encapsulated within one or more signalling protocol messages.

Embodiments of the present invention enable signalling information to be provided within and at the edges of the second signalling network, which information meets the requirements of the users of both the first and second networks.

Preferably, said first network is an SS7 based signalling network. More preferably, said first signalling protocol is ISUP although it may another SS7 signalling protocol such as MAP or INAP. The second signalling network may be an IP based network, e.g. H.323, whilst the second signalling protocol may be H.225.

According to a second aspect of the present invention there is provided a gateway for coupling together two different signalling networks using respective different signalling protocols, the media controller comprising:
receiving means for receiving from a first of the networks a signalling message according to a corresponding first of the signalling protocols;
first processing means for defining a signalling message according to a second of the signalling protocols;
characterised by
second processing means for constructing a composite signalling message containing at least part of the information contained in the received message and at least part of the information contained in the defined signalling message; and
transmission means for sending the composite signalling message over a second of the signalling networks, wherein the reliable transport of the composite signalling message across said second network is ensured by a Common Signalling Transport Protocol (CSTP) layer, which layer resides at the media controller above the transport media protocol layer;
the second processing means implementing an adaptation protocol layer residing above the CSTP layer, and arranged to generate message primitives of an adaptation layer message, which message is arranged to contain in its user data field said composite signalling message.

### Brief Description of the Drawings

Figure 1 illustrates the multi-layer architecture of the SIGTRAN protocol;
Figure 2 illustrates a proposed method for interworking between two different signalling networks;
Figure 3 illustrates an alternative method for interworking between two different signalling networks;
Figure 4 illustrates a method of interworking between two different signalling networks according to an embodiment of the present invention;
Figure 5 illustrates the use of a modified SIGTRAN protocol within a media controller; and
Figure 6 illustrates the structure of a composite message generated by the modified SIGTRAN protocol of Figure 5.

### Detailed Description of Certain Embodiments

The current proposals made by the IETF SIGTRAN working group have been set out above with reference to Figures 1 to 3.

As has already been set out above, it is recognised that it is desirable to directly use messages from one network based on one signalling system, in another network based on a second signalling system. However, it is also recognised that when this is done information may be lost resulting in a degradation of the service level. Thus it is proposed here to use the corresponding messages, in whole or in part, from each signalling system and to 'encapsulate' or 'bundle' them one composite SIGTRAN transport message. According to this approach, there is no restriction on the number of different protocols which may be bundled in a single adaptation layer.

Figure 4 illustrates two different signalling networks, a first based upon SS7 and a second based upon H.323, coupled together at an interface by a media controller, more particularly a gateway node. In the given example, the node receives an Initial Address Message (IAM) over the first network and generates a composite ISUP+H.225 message for transmission over the second network.

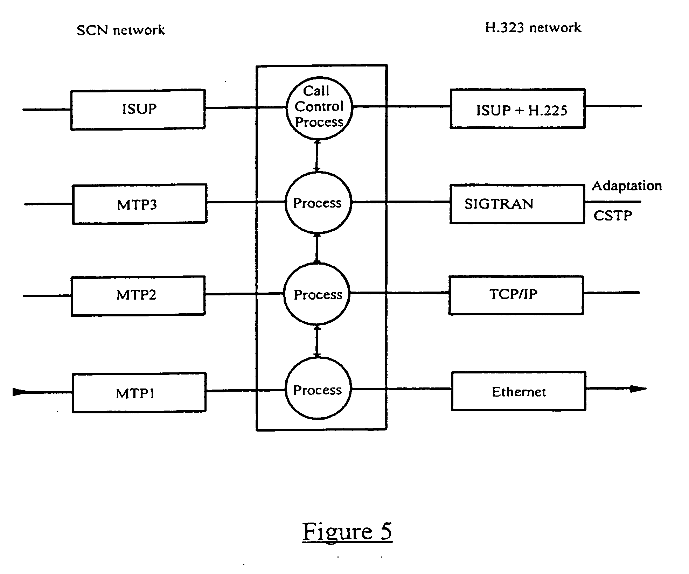

Figure 5 illustrates the protocol architecture present at a node within the H.323 network where there are provided both ISUP and H.225 parts. The composite ISUP+H.225 message is generated by the call control process at the ISUP/H.225 level. Message primitives including message headers are generated at successive lower layers, with the final signalling message (i.e. the message which is actually sent across the wires) being generated at level 1. This message has the following structure:

| | | | | |
|---|---|---|---|---|
| Ethernet header | TCP/IP header | CSTP header | Adaptation layer | Data |

where the Data field contains the composite ISUP+H.225 message. Due to the presence of the adaptation module in the SIGTRAN layer, the SIGTRAN layer appears to higher layers as an MTP3 layer.

In the example considered here, the SIGTRAN adaptation layer is defined so as to allow the definition and transport of multiple protocols (in whole or part) in one SIGTRAN transport message, thus allowing the information from one signalling system to be used in conjunction with the information from a second signalling system to thereby provide a full service level to users of both signalling networks. The defined adaptation layer provides for the updating of the primitives passed between the Signalling Protocol layers and the Adaptation Modules. The adaptation layer also specifies the primitives to be used between the adaptation module and the Common signalling transport layer.

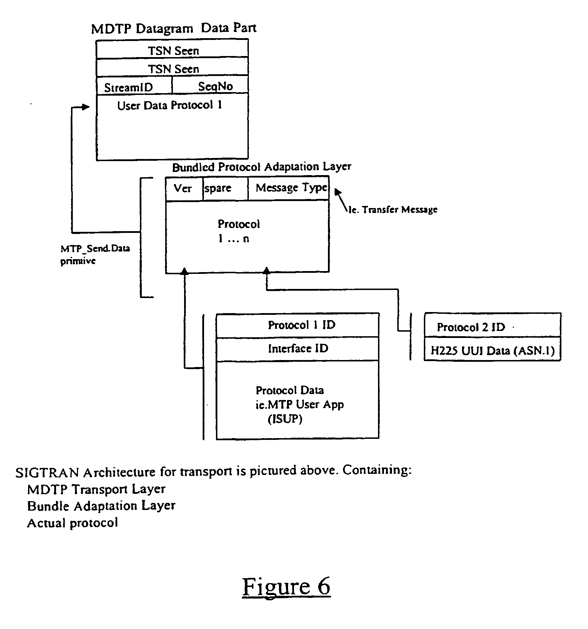

Figure 6 shows in more detail the structure proposed for the composite SIGTRAN message. The MDTP (i.e. CSTP) datagram comprises a field for containing separate protocol parts 1, 2, .... ,n (e.g. ISUP, H225, etc).

The SIGTRAN protocol may be used in several types of networks including UMTS core networks, H.323 VoIP, SIP based VoIP networks.

It will be appreciated by the person of skill in the art that various modifications may be made to the above described embodiment without departing from the scope of the present invention.

## Claims

1. A method of sending signalling messages over a communication system comprising at least two different signalling networks coupled together at a media controller, the method comprising:
receiving a signalling message of a first signalling transport protocol at the media controller, the message being sent to the media controller over a first of the signalling networks;
at the media controller, defining a signalling message or part(s) thereof of a second signalling transport protocol corresponding to said signalling message of the first signalling transport protocol;
**characterised by**
constructing a composite signalling message containing at least part of the information contained in the received message and at least part of the information contained in the defined signalling message or part(s) thereof;
sending the composite signalling message over a second of the signalling networks, wherein the reliable transport of the composite signalling message across said second network is ensured by a Common Signalling Transport Protocol (CSTP) layer, which layer resides at the media controller above the transport media protocol layer,
wherein an adaptation protocol layer, residing above the CSTP layer, generates message primitives of an adaptation layer message, which message is arranged to contain in its user data field said composite signalling message, and
receiving the composite signalling message at a node within or at the edge of the second signalling network, and at an adaptation protocol layer thereof decomposing the composite signalling message into first and second protocol parts, and passing one or both of these parts to application and/or user parts.

2. A method according to claim 1, wherein said first network is an SS7 based signalling network.

3. A media controller for coupling together two different signalling networks using respective different signalling transport protocols, the media controller comprising:
receiving means for receiving from a first of the networks a signalling message according to a corresponding first of the signalling transport protocols;
first processing means for defining a signalling message according to a second of the signalling transport protocols and corresponding to the first mentioned signalling message;
**characterised by**
second processing means for constructing a composite signalling message containing at least part of the information contained in the received message and at least part of the information contained in the defined signalling message; and
transmission means for sending the composite signalling message over a second of the signalling networks, wherein the reliable transport of the composite signalling message across said second network is ensured by a Common Signalling Transport Protocol (CSTP) layer, which layer resides at the media controller above the transport media protocol layer;
the second processing means implementing an adaptation protocol layer residing above the CSTP layer, and arranged to generate message primitives of an adaptation layer message, which message is arranged to contain in its user data field said composite signalling message.

## Patentansprüche

1. Verfahren zum Senden von Signalisierungsnachrichten über ein Kommunikationssystem, welches wenigstens zwei unterschiedliche Signalisierungsnetze umfasst, die an einem Medien-Controller zusammen gekoppelt sind, wobei das Verfahren die folgenden Schritte umfasst:
Empfangen einer Signalisierungsnachricht eines ersten Signalisierungstransportprotokolls an dem Medien-Controller, wobei die Nachricht an den Medien-Controller über ein erstes der Signalisierungsnetze gesendet wird;
an dem Medien-Controller, Definieren einer Signalisierungsnachricht oder eines Teil (von Teilen) davon eines zweites Signalisierungstransportprotokolls entsprechend zu der Signalisierungsnachricht des ersten Signalisierungstransportprotokolls;
**gekennzeichnet durch**
Konstruieren einer zusammengesetzten Signalisierungsnachricht, die wenigstens einen Teil der Information, die in der empfangenen Nachricht enthalten ist, und wenigstens einen Teil der Information, die in der definierten Signalisierungsnachricht oder einem Teil (von Teilen) davon enthalten ist, enthält;
Senden der zusammengesetzten Signalisierungsnachricht über ein zweites der Signalisierungsnetze, wobei der zuverlässige Transport der zusammengesetzten Signalisierungsnachricht über das zweite Netz **durch** eine Common Signalling Transport Protocol (CSTP) Schicht sichergestellt wird, wobei diese Schicht in dem Medien-Controller über der Transportmedienprotokollschicht liegt,
wobei eine Adaptionsprotokollschicht, die über der CSTP Schicht liegt, Nachrichten-Primitive einer Adaptionsschichtnachricht erzeugt, wobei diese Nachricht angeordnet ist, um in ihrem Benutzerdatenfeld die zusammengesetzte Signalisierungsnachricht zu enthalten, und
Empfangen der zusammengesetzten Signalisierungsnachricht an einem Knoten innerhalb des oder an der Kante des zweiten Signalisierungsnetzes, und an einer Adaptionsprotokollschicht davon, Zerlegen der zusammengesetzten Signalisierungsnachricht in die ersten und zweiten Protokollteile, und Übergeben von einem oder beiden von diesen Teilen an Anwendungs- und/oder Benutzer-Teile.

2. Verfahren nach Anspruch 1, wobei das erste Netz ein SS7 gestütztes Signalisierungsnetz ist.

3. Medien-Controller zum Zusammenkoppeln von zwei unterschiedlichen Signalisierungsnetzen, die jeweilige unterschiedliche Signalisierungstransportprotokolle verwenden, wobei der Medien-Controller umfasst:
eine Empfangseinrichtung, um von einem ersten der Netze eine Signalisierungsnachricht gemäß eines entsprechenden ersten der Signalisierungstransportprotokolle zu empfangen;
eine erste Verarbeitungseinrichtung zum Definieren einer Signalisierungsnachricht gemäß eines zweiten der Signalisierungstransportprotokolle und entsprechend zu der zuerst erwähnten Signalisierungsnachricht;
**gekennzeichnet durch**
eine zweite Verarbeitungseinrichtung zum Konstruieren einer zusammengesetzten Signalisierungsnachricht, die wenigstens einen Teil der Information, die in der empfangenen Nachricht enthalten ist, und wenigstens einen Teil der Information, die in der definierten Signalisierungsnachricht enthalten ist, enthält; und
eine Übertragungseinrichtung zum Senden der zusammengesetzten Signalisierungsnachricht über ein zweites der Signalisierungsnetze, wobei der zuverlässige Transport der zusammengesetzten Signalisierungsnachricht über das zweite Netz **durch** eine Common Signalling Transport Protocol (CSTP) Schicht sichergestellt wird, wobei diese Schicht an dem Medien-Controller über der Transportmedienprotokollschicht liegt;
wobei die zweite Verarbeitungseinrichtung eine Adaptionsprotokollschicht implementiert, die über der CSTP Schicht liegt und angeordnet ist, um Nachrichten-Primitive einer Adaptionsschichtnachricht zu erzeugen, wobei diese Nachricht angeordnet ist, um in ihrem Benutzerdatenfeld die zusammengesetzte Signalisierungsnachricht zu enthalten.

## Revendications

1. Procédé d'envoi de messages de signalisation sur un système de communication comprenant au moins deux réseaux de signalisation différents qui sont couplés ensemble au niveau d'un contrôleur de media, le procédé comprenant:
la réception d'un message de signalisation d'un premier protocole de transport de signalisation au niveau du contrôleur de media, le message étant envoyé sur le contrôleur de media sur un premier des réseaux de signalisation;
au niveau du contrôleur de média, la définition d'un message de signalisation ou de sa ou ses partie(s) d'un second protocole de transport de signalisation correspondant audit message de signalisation du premier protocole de transport de signalisation,
**caractérisé par**:
la construction d'un message de signalisation composite contenant au moins une partie de l'information qui est contenue dans le message reçu et au moins une partie de l'information qui est contenue dans le message de signalisation défini ou dans sa ou ses partie(s);
l'envoi du message de signalisation composite sur un second des réseaux de signalisation, dans lequel le transport fiable du message de signalisation composite au travers dudit second réseau est assuré par une couche de Protocole de Transport de Signalisation Commun (CSTP), laquelle couche réside au niveau du contrôleur de media au-dessus de la couche de protocole de media de transport;
dans lequel une couche de protocole d'adaptation, qui réside au-dessus de la couche CSTP, génère des primitives de message d'un message de couche d'adaptation, lequel message est agencé pour contenir dans sa zone de données d'utilisateur ledit message de signalisation composite; et
la réception du message de signalisation composite au niveau d'un noeud à l'intérieur ou au niveau du bord du second réseau de signalisation, et au niveau d'une couche de protocole d'adaptation afférente, la décomposition du message de signalisation composite selon des première et seconde parties de protocole et le passage de l'une de ces parties ou des deux à une application et/ou à des parties d'utilisateur.

2. Procédé selon la revendication 1, dans lequel ledit premier réseau est un réseau de signalisation basé sur SS7.

3. Contrôleur de media pour coupler ensemble deux réseaux de signalisation différents qui utilisent des protocoles de transport de signalisation différents respectifs, le contrôleur de media comprenant:
un moyen de réception pour recevoir depuis un premier des réseaux un message de signalisation conformément à un premier correspondant des protocoles de transport de signalisation; et
un premier moyen de traitement pour définir un message de signalisation conformément à un second des protocoles de transport de signalisation et correspondant au premier message de signalisation mentionné,
**caractérisé par**:
un second moyen de traitement pour construire un message de signalisation composite contenant au moins une partie de l'information contenue dans le message reçu et au moins une partie de l'information contenue dans le message de signalisation défini; et
un moyen d'émission pour envoyer le message de signalisation composite sur un second des réseaux de signalisation, dans lequel le transport fiable du message de signalisation composite au travers dudit second réseau est assuré par une couche de Protocole de Transport de Signalisation Commun (CSTP), laquelle couche réside au niveau du contrôleur de media au-dessus de la couche de protocole de media de transport;
le second moyen de traitement mettant en oeuvre une couche de protocole d'adaptation qui réside au-dessus de la couche CSTP et qui est agencée pour générer des primitives de message d'un message de couche d'adaptation, lequel message est agencé pour contenir dans sa zone de données d'utilisateur ledit message de signalisation composite.
